# EUROPEAN PATENT APPLICATION

(11) **EP 4 575 884 A1**
(43) Date of publication of application: **25.06.2025**
(21) Application number: 24181552.1
(22) Date of filing: 12.06.2024
(51) Int. Cl.: G06F 40/30, G06F 40/56

(54) **METHOD AND APPARATUS FOR PROCESSING MODEL GENERATION RESULT, ELECTRONIC DEVICE AND STORAGE MEDIUM**

(30) Priority: 20.12.2023 CN 202311765088
(71) Applicant: Beijing Baidu Netcom Science and Technology Co., Ltd, Beijing 100085 (CN)
(72) Inventor: TIAN, Meng, Beijing, 100085 (CN); YANG, Lin, Beijing, 100085 (CN); FENG, Xinwei, Beijing, 100085 (CN); FENG, Zhifan, Beijing, 100085 (CN); CUI, Xiaopeng, Beijing, 100085 (CN); SHE, Qiaoqiao, Beijing, 100085 (CN); WU, Hua, Beijing, 100085 (CN)
(74) Representative: Michalski Hüttermann & Partner Patentanwälte mbB

(57) **Abstract**

The present disclosure provides a method and apparatus for processing a model generation result, an electronic device and a storage medium, and relates to the field of artificial intelligence technologies, such as machine learning technologies, natural language processing technologies. An implementation includes: disassembling a text generation result of a generative large model to obtain a plurality of result logic units; wherein each result logic unit includes a segment in the text generation result; each segment is capable of independently identifying one premise or conclusion in a logical inference relationship of the text generation result; and the text generation result is a response result generated by the generative large model based on text input information; generating a logical inference graph capable of characterizing a logical inference relationship among the plurality of result logic units based on the plurality of result logic units; and determining whether logical inference of generation of the text generation result by the generative large model is correct or not based on the logical inference graph. With the technology according to the present disclosure, whether logical inference of the generative large model is correct or not can be efficiently and accurately determined.

## Description

### TECHNICAL FIELD

The present disclosure relates to the field of computer technologies, particularly to the field of artificial intelligence technologies, such as machine learning technologies, natural language processing technologies, or the like, and more particularly to a method and an apparatus for processing a model generation result, an electronic device and a storage medium.

### BACKGROUND

With wide application of a generative large model, effect evaluation of the generative large model becomes a quite important technology.

The effect evaluation of the generative large model refers to judging whether a text generation result of the generative large model is correct or not. The effect evaluation of the generative large model is different from task evaluation of a traditional model in that the text generation result of the generative large model is not unique and fixed, such that the effect evaluation cannot be simply carried out by judging whether character strings are matched or not.

### SUMMARY

The present disclosure provides a method and apparatus for processing a model generation result, an electronic device and a storage medium.

According to one aspect of the present disclosure, there is provided a method for processing a model generation result, including:
disassembling a text generation result of a generative large model to obtain a plurality of result logic units; where each result logic unit includes a segment in the text generation result; each segment is capable of independently identifying one premise or conclusion in a logical inference relationship of the text generation result; the text generation result is a response result generated by the generative large model based on text input information;
generating a logical inference graph capable of characterizing a logical inference relationship among the plurality of result logic units based on the plurality of result logic units; and
evaluating whether logical inference of generation of the text generation result by the generative large model is correct or not based on the logical inference graph.

According to another aspect of the present disclosure, there is provided an apparatus for processing a model generation result, including:
a disassembling module configured to disassemble a text generation result of a generative large model to obtain a plurality of result logic units; where each result logic unit includes a segment in the text generation result; each segment is capable of independently identifying one premise or conclusion in a logical inference relationship of the text generation result; the text generation result is a response result generated by the generative large model based on text input information;
a generating module configured to generate a logical inference graph capable of characterizing a logical inference relationship among the plurality of result logic units based on the plurality of result logic units; and
an evaluating module configured to evaluate whether logical inference of generation of the text generation result by the generative large model is correct or not based on the logical inference graph.

According to still another aspect of the present disclosure, there is provided an electronic device, including:
at least one processor; and
a memory connected with the at least one processor communicatively;
where the memory stores instructions executable by the at least one processor to enable the at least one processor to perform the method of the aspect as described above and any possible implementation.

According to yet another aspect of the present disclosure, there is provided a non-transitory computer readable storage medium with computer instructions stored thereon, where the computer instructions are used for causing a computer to perform the method of the aspect as described above and any possible implementation.

According to another aspect of the present disclosure, there is provided a computer program product including a computer program which, when executed by a processor, implements the method of the aspect as described above and any possible implementation.

With the technology according to the present disclosure, whether the logical inference of the generative large model is correct or not can be efficiently and accurately determined, and then, an evaluation efficiency of the generative large model can be effectively improved.

It should be understood that the statements in this section are not intended to identify key or critical features of the embodiments of the present disclosure, nor limit the scope of the present disclosure. Other features of the present disclosure will become apparent from the following description.

### BRIEF DESCRIPTION OF THE DRAWINGS

The drawings are used for better understanding the present solution and do not constitute a limitation of the present disclosure. In the drawings,
Fig. 1 is a schematic diagram according to a first embodiment of the present disclosure;
Fig. 2 is a schematic diagram according to a second embodiment of the present disclosure;
Fig. 3 is a logical inference graph in the present disclosure;
Fig. 4 is a schematic diagram according to a third embodiment of the present disclosure;
Fig. 5 is a schematic diagram of a logical inference graph generated in this embodiment;
Figs. 6A, 6B and 6C are two-layer subgraphs split from the logical inference graph shown in Fig. 5 respectively;
Fig. 7 is a schematic diagram according to a fourth embodiment of the present disclosure;
Fig. 8 is a schematic diagram according to a fifth embodiment of the present disclosure; and
Fig. 9 is a block diagram of an electronic device configured to implement a method according to the embodiment of the present disclosure.

### DETAILED DESCRIPTION OF EMBODIMENTS

The following part will illustrate exemplary embodiments of the present disclosure with reference to the drawings, including various details of the embodiments of the present disclosure for a better understanding. The embodiments should be regarded only as exemplary ones. Therefore, those skilled in the art should appreciate that various changes or modifications can be made with respect to the embodiments described herein without departing from the scope and spirit of the present disclosure. Similarly, for clarity and conciseness, the descriptions of the known functions and structures are omitted in the descriptions below.

Apparently, the embodiments to be described are merely a part rather than all of the embodiments of the present disclosure. All other embodiments obtained by a person of ordinary skill in the art based on the embodiments of the present disclosure without creative efforts shall fall within the protection scope of the present disclosure.

It should be noted that a terminal device in the embodiments of the present disclosure may include, but is not limited to, a mobile phone, a personal digital assistant (PDA), a wireless handheld device, a tablet computer, and other smart devices; a display device may include, but not limited to, a personal computer, a television, and other devices with a display function.

In addition, the term "and/or" only describes an association relationship between associated objects, and indicates that three relationships may exist. For example, A and/or B may indicate three cases: only A exists; both A and B exist; and only B exists. In addition, in this specification, the symbol "/" generally indicates that associated objects have a relationship of "or".

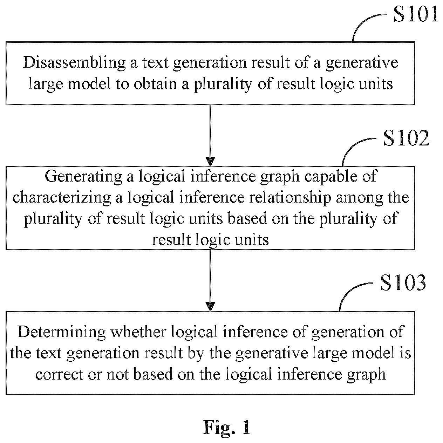

Fig. 1 is a schematic diagram according to a first embodiment of the present disclosure; as shown in Fig. 1, this embodiment provides a method for processing a model generation result, which may include the following steps:
S101: disassembling a text generation result of a generative large model to obtain a plurality of result logic units;

In this embodiment, each result logic unit includes a segment in the text generation result; each segment is capable of independently identifying one premise or conclusion in a logical inference relationship of the text generation result; and the text generation result is a response result generated by the generative large model based on text input information.

A subject for executing the method for processing a model generation result according to this embodiment may be an apparatus for processing a model generation result, and the apparatus may be a stand-alone electronic device or an application based on software to evaluate a generation effect of the generative large model.

The generative large model in this embodiment may also be referred to as a generative language model (GLM) or a generative large language model.

In this embodiment, taking use of the generative large model in a text processing field as an example, in use, the text input information is input into the generative large model, and the generative large model may generate and output the text generation result based on the text input information. In an actual application scenario, in order to improve an effect of generation of the text generation result by the generative large model, corresponding processing is required to be performed on the generation result of the generative large model, so as to efficiently and accurately determine whether logical inference of the generative large model is correct or not, and then, the generative large model can be accurately and effectively evaluated. The generative large model can be optimized in turn based on the evaluation result to further improve the text generation effect of the generative large model.

The text generation result of the generative large model is generally long and may include a plurality of sentences. The segment in each result logic unit can be one sentence or two or more continuous sentences in the text generation result. In other words, the segment has to be a continuous segment in the text generation result, and cannot be concatenated by two or more discontinuous segments.

Specifically, in this embodiment, the disassembly of the text generation result has a principle of ensuring that each disassembled result logic unit is one premise or conclusion during logical relationship inference of the text generation result.

S102: generating a logical inference graph capable of characterizing a logical inference relationship among the plurality of result logic units based on the plurality of result logic units.

The logical inference graph in this embodiment is a directed acyclic graph formed by the plurality of result logic units according to the logical inference relationship.

S 103 : determining whether logical inference of generation of the text generation result by the generative large model is correct or not based on the logical inference graph.

The logical inference graph is generated based on the logical inference relationship among the plurality of result logic units, such that whether the logical inference of the generation of the text generation result by the generative large model is correct or not can be evaluated by referring to the logical inference relationship among the plurality of result logic units in the logical inference graph, and then, the generative large model can be evaluated from a logical inference dimension. In other words, if the logical inference of the generation of the text generation result by the generative large model is correct, the logical inference of the generative large model is correct; and if the logical inference of the generation of the text generation result by the generative large model is incorrect, the logical inference of the generative large model is incorrect.

In the method for processing a model generation result according to this embodiment, the text generation result is disassembled to obtain the plurality of result logic units, the logical inference graph of the plurality of result logic units is generated, and whether the logical inference of the generation of the text generation result by the generative large model is correct or not is further determined according to the logical inference graph, such that whether the logical inference of the generative large model is correct or not is effectively and accurately determined. Therefore, with the technical solution of this embodiment, the text generation result of the generative large model can be efficiently and accurately evaluated from the logical inference dimension, and then, the generative large model can be efficiently and accurately evaluated. Moreover, for the technical solution of this embodiment, full-automatic running can be realized, manual processing is avoided, a labor cost can be greatly reduced, an evaluation speed is increased, and an evaluation efficiency of the generative large model is effectively improved.

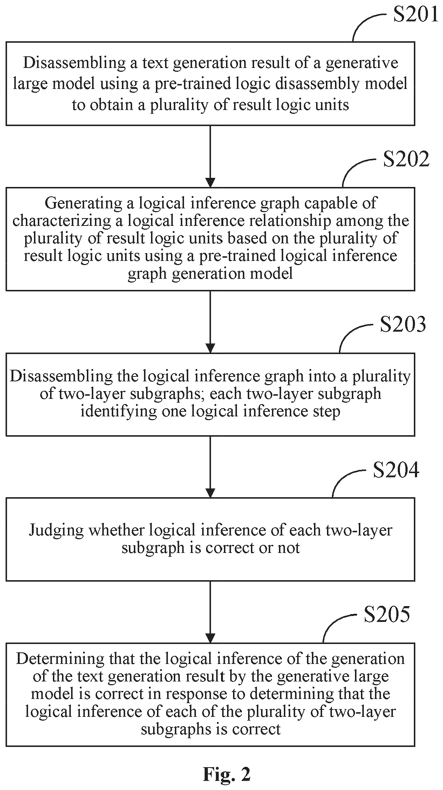

Fig. 2 is a schematic diagram according to a second embodiment of the present disclosure; the technical solution of a method for processing a model generation result according to this embodiment of the present disclosure is further described in more detail based on the technical solution of the above-mentioned embodiment shown in Fig. 1. As shown in Fig. 2, the method for processing a model generation result according to this embodiment may include the following steps:
S201: disassembling a text generation result of a generative large model using a pre-trained logic disassembly model to obtain a plurality of result logic units.

This step is an implementation of the step S 101 in the embodiment shown in Fig. 1. In this implementation, the text generation result is automatically disassembled using the pre-trained logic disassembly model. During implementation, the text generation result is input into the logic disassembly model, and the logic disassembly model can directly output the plurality of corresponding result logic units based on the input text generation result.

For the logic disassembly model in this embodiment, multiple groups of training data can be collected before training, and each group of training data includes a training language material and a plurality of training logic units obtained by manually disassembling the training language material. The disassembly also has a principle of ensuring that each disassembled training logic unit is one premise or conclusion during logical relationship inference of the training language material. Then, the logic disassembly model is trained using the plurality of groups of training data, such that the logic disassembly model can learn a disassembly capability.

In this embodiment, the text generation result is intelligently disassembled with the logic disassembly model, such that accuracy of the plurality of disassembled result logic units can be effectively improved, and a disassembling efficiency is improved.

In addition, optionally, in the step S 101 in the embodiment shown in Fig. 1, the text generation result of the generative large model can also be disassembled according to a preset disassembly strategy to obtain a plurality of result logic units.

For example, the preset disassembly strategy may be configured to ensure that each disassembled result logic unit is one premise or conclusion in the logical inference relationship of the text generation result.

During implementation, the text generation result may be first split according to sentence granularity, and then, all segment division modes are traversed to obtain multiple split results of the text generation result. In each segment division mode, one sentence may be taken as one segment individually, or two or more adjacent continuous sentences may be taken as one segment. Then, each split segment in each split result can be detected, and whether the segment can be used as one premise or conclusion in the logical inference relationship of the text generation result is detected. Finally, the split result in which each disassembled segment can be used as one premise or conclusion is selected from all the split results as a final required disassembly result, so as to correspondingly obtain the plurality of result logic units.

The multiple result logic units can also be efficiently and accurately obtained by performing disassembly according to the preset disassembly strategy.

S202: generating a logical inference graph capable of characterizing a logical inference relationship among the plurality of result logic units based on the plurality of result logic units using a pre-trained logical inference graph generation model.

In this embodiment, a logical inference graph generation model may be trained in advance, and in use, the plurality of result logic units are input to the logical inference graph generation model, and the logical inference graph generation model may generate the logical inference graph formed by the plurality of result logic units based on input information.

The logical inference graph generation model can also be obtained by performing training using multiple groups of training data, and each training data can include a plurality of training logic units and a training logical inference graph labeled based on the plurality of training logic units. By training the logical inference graph generation model using the plurality of groups of training data, the logical inference graph generation model can learn the capability of generating the corresponding training logical inference graph based on the plurality of training logic units.

In use, the plurality of result logic units are input into the logical inference graph generation model trained according to the above method, and at this point, the logical inference graph generation model can generate and output the logical inference graph capable of characterizing the logical inference relationship among the plurality of result logic units.

With the mode of intelligently generating the logical inference graph according to the logical inference graph generation model, the logical inference graph of the plurality of result logic units can be efficiently and accurately generated.

S203: disassembling the logical inference graph into a plurality of two-layer subgraphs; each two-layer subgraph identifying one logical inference step.

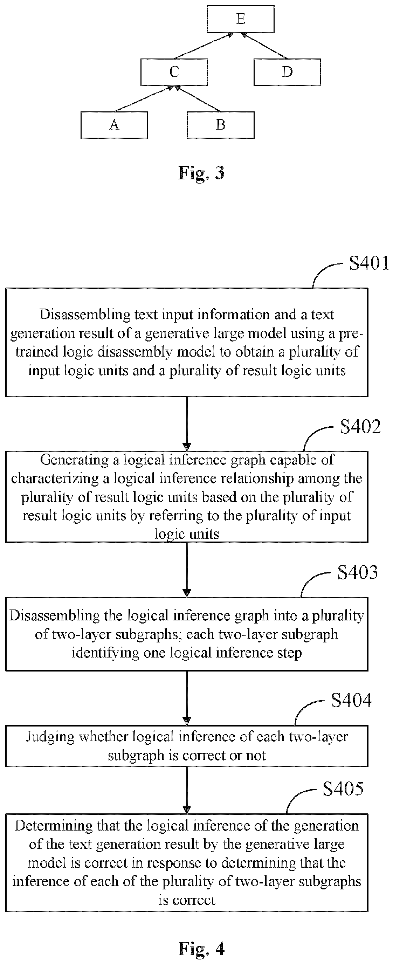

Specifically, during the disassembly of the two-layer subgraph, a smallest logical relationship subgraph, i.e., the two-layer subgraph, is disassembled according to the inference relationship in the logical inference graph. For example, Fig. 3 is a logical inference graph in the present disclosure. According to the disassembly process of this embodiment, the logical inference graph shown in Fig. 3 can be disassembled into two two-layer subgraphs, such as a two-layer subgraph composed of A, B and C, and a two-layer subgraph composed of C, D and E. Each two-layer subgraph corresponds to one logical inference step. In this way, all two-layer subgraphs in the logical inference graph can be obtained by disassembly.

S204: judging whether logical inference of each two-layer subgraph is correct or not.

Specifically, during the judgment, whether the logical inference of each two-layer subgraph is correct may be inferred using a pre-trained inference model. For example, in use, the two-layer subgraphs can be sequentially input into the inference model from top to bottom and from left to right in the logical inference graph. Then, whether the logical inference characterized by the input two-layer subgraphs is correct or not is sequentially judged by the inference model. The inference model in this embodiment can also be implemented by using a large language model (LLM). Optionally, in this embodiment, whether the inference of each two-layer subgraph is correct can also be judged by setting a certain strategy, and whether the logical inference of each two-layer subgraph is correct can be accurately determined.

S205: determining that the logical inference of the generation of the text generation result by the generative large model is correct in response to determining that the logical inference of each of the plurality of two-layer subgraphs is correct.

In other words, if the logical inference of at least one of the multiple two-layer subgraphs is incorrect, the logical inference of the generation of the text generation result by the generative large model is considered to be incorrect, and the logical inference of the generative large model is then determined to be incorrect.

The steps S203-S205 in this embodiment are a specific implementation of the step S103 in the above-mentioned embodiment shown in Fig. 1.

Specifically, in the implementation, the logical inference graph is disassembled into the plurality of two-layer subgraphs, and whether the logical inference of the generation of the text generation result by the generative large model is correct is judged by judging whether the single logical inference step of each two-layer subgraph is correct, so as to judge whether the logical inference of the generation by the generative large model is correct.

In this embodiment, in this way, only one two-layer subgraph is judged each time; in other words, whether a single logical inference step is correct or not is judged each time, such that difficulty of judging whether the logical inference of the text generation result generated by the generative large model is correct or not can be effectively reduced, accuracy of judging whether the logical inference of the generative large model is correct or not is effectively improved, evaluation accuracy and an evaluation efficiency of the text generation result of the generative large model can be effectively improved, and an evaluation effect of the generative large model can be greatly improved.

In the method for processing a model generation result according to this embodiment, with the above mode, the generative large model can be automatically evaluated by accurately judging whether the logical inference of the generative large model is correct, thereby saving time and labor, effectively increasing an evaluation speed and improving the evaluation efficiency of the generative large model. Moreover, the logical inference of the text generation result is judged by judging the logical inference of each two-layer subgraph disassembled from the logical inference graph of the text generation result, and then, the text generation result of the generative large model is evaluated, thereby effectively improving the evaluation accuracy and the evaluation efficiency.

Fig. 4 is a schematic diagram according to a third embodiment of the present disclosure; the technical solution of a method for processing a model generation result according to this embodiment of the present disclosure is further described in more detail based on the technical solution of the above-mentioned embodiment shown in Fig. 1. As shown in Fig. 4, the method for processing a model generation result according to this embodiment may include the following steps:
S401: disassembling text input information and a text generation result of a generative large model using a pre-trained logic disassembly model to obtain a plurality of input logic units and a plurality of result logic units.

Each input logic unit includes a segment in the text input information, and each segment can independently identify one premise or conclusion in a logical inference relationship of the text input information. Each result logic unit includes a segment in the text generation result; each segment can correspondingly and independently identify one premise or conclusion in a logical inference relationship of the text generation result. For the implementation, reference may be made to the related description of the step S201 in the above-mentioned embodiment shown in Fig. 2, and details are not repeated herein.

S402: generating a logical inference graph capable of characterizing a logical inference relationship among the plurality of result logic units based on the plurality of result logic units by referring to the plurality of input logic units.

In other words, in this embodiment, the logical inference graph of the multiple result logic units is generated according to the multiple result logic units by referring to the multiple input logic units.

For example, the step S402 may include the following steps during implementation:
(1) retrieving a most relevant example in a preset example database based on the plurality of input logic units and the plurality of result logic units; and
(2) generating the logical inference graph corresponding to the plurality of result logic units by another pre-trained generative large model based on the plurality of input logic units, the plurality of result logic units, a plurality of input example logic units, a plurality of result example logic units and a corresponding example logical inference graph.

In the example database preset in this embodiment, a plurality of groups of examples may be stored. Each group of examples may include the plurality of input example logic units corresponding to input example information, the plurality of result example logic units corresponding to result example information, and the example logical inference graph corresponding to the plurality of result example logic units.

In this embodiment, information in the example database is also in a text form; in other words, the input example information in each group of examples is text input example information, and the result example information is text result example information. In other words, the input example information may be the text input information of the generative large model, and the result example information may be the text generation result generated by the generative large model. The plurality of input example logic units and the plurality of result example logic units may be obtained by adopting the disassembly mode for the plurality of input logic units and the plurality of result logic units in the step S401. The example logical inference graph in this embodiment can be manually labeled based on the plurality of result example logic units.

During specific retrieval, in this embodiment, the most relevant example may be retrieved from the preset example database based on the plurality of input logic units and the plurality of result logic units. The most relevant example herein may be considered as an example corresponding to the plurality of input example logic units and the plurality of result example logic units which are semantically and contextually most relevant to the plurality of input logic units and the plurality of result logic units as a whole.

Then, the multiple input logic units, the multiple result logic units and information included in the most relevant example can be concatenated to be input into the generative large model together, such that another pre-trained generative large model can generate the example logical inference graph corresponding to the multiple result example logic units based on the mode of generating the example logical inference graph by the multiple result example logic units in the most relevant example. In this embodiment, the another pre-trained generative large model is not the generative large models to be evaluated in this embodiment, but is another trained generative large model.

Optionally, in this embodiment, each group of examples in the example database may include only the plurality of result example logic units corresponding to the result example information and the example logical inference graph corresponding to the plurality of result example logic units.

In this case, correspondingly, during specific retrieval, the most relevant example may be retrieved in the preset example database based on only the plurality of result logic units; and specifically, based on the plurality of result example logic units and the corresponding example logical inference graph, the logical inference graph corresponding to the plurality of result logic units is generated with another pre-trained generative large model.

However, accuracy of this implementation is slightly poorer than the implementation that the above-mentioned example database includes the multiple input example logic units corresponding to the input example information and a corresponding technical solution at the same time .

In this embodiment, by retrieving the most relevant example and intelligently generating the logical inference graph by using another generative large model, the logical inference graph of the plurality of result logic units can be accurately and efficiently generated.

S403: disassembling the logical inference graph into a plurality of two-layer subgraphs; each two-layer subgraph identifying one logical inference step.

S404: judging whether logical inference of each two-layer subgraph is correct or not.

S405: determining that the logical inference of the generation of the text generation result by the generative large model is correct in response to determining that the inference of each of the plurality of two-layer subgraphs is correct.

For the implementation of the steps S403-S405 in this embodiment, reference may be made to the description of the steps S203-S205 in the above-mentioned embodiment shown in Fig. 2, and details are not repeated herein.

With the method for processing a model generation result according to this embodiment, by adopting the above mode, the logical inference graph of the plurality of result logic units can be further generated more accurately and efficiently, and the accuracy of judging whether the logical inference of the generative large model is correct can be further improved, thereby effectively improving the evaluation accuracy and the evaluation efficiency of the generative large model.

An evaluation method for the generative large model in the present disclosure is described below with a specific example.

For example, in this example, the text input information query may be as follows: policemen catch four thief suspects: A, B, C and D; their confessions are as follows. A: I am not the thief. B: A is the thief. C: I am not the thief. D: B is the thief. It is known that only one of them tells the truth. Who is the thief?

The text input information is input into the generative large model, the text generation result response generated by the generative large model is as follows: according to the question stem "B: A is the thief, A: I am not the thief, one of A and B tells the truth, and C and D both lie; in other words, C lies, and C is the thief.

For example, according to the step S401, the plurality of input logic units obtained by disassembling the text input information query include: a first input logic unit [query-unit-1]: policemen catch four thief suspects: A, B, C and D; their confessions are as follows; a second input logic unit [query-unit-2]: A: I am not the thief; a third input logic unit [query-unit-3]: B: A is the thief; a fourth input logic unit [query-unit-4]: C: I am not the thief; a fifth input logic unit [query-unit-5]: D: B is the thief; a sixth input logic unit [query-unit-6]: it is known that only one of them tells the truth; and a seventh input logic unit [query-unit-7]: who is the thief.

Similarly, according to the step S401, the multiple result logic units obtained by disassembling the text generation result response include: a first result logic unit [response-unit-1]: B: A is the thief; a second result logic unit [response-unit-2]: A: I am not the thief; a third result logic unit [response-unit-3]: one of A and B tells the truth; a fourth result logic unit [response-unit-4]: C and D both lie; a fifth result logic unit [response-unit-5]: in other words, C lies; and a sixth result logic unit [response-unit-6]: C is the thief.

Next, the logical inference graph of the plurality of result logic units may be generated according to the mode of the step S302.

In this embodiment, the logical inference process does not have a chain or tree structure, but rather likes a directed acyclic graph. The logical inference process represents an inference process of a question, and each node of the generated logical inference graph is a minimum logic unit, i.e., one result logic unit. Each two-layer subgraph in the logical inference graph represents a minimum inference process.

The example database in this embodiment may be an in-context-learning (ICL) database.

Specifically, according to an implementation of the step S402, the retrieval in the ICL database may be referred to as ICL retrieval. During specific retrieval, the plurality of input logic units and the plurality of result logic units are input, and the most relevant example is retrieved in the ICL database according to the multiple input logic units and the multiple result logic units. A prompt is concatenated in a one-shot mode, the concatenated prompt is concatenated by the plurality of input example logic units, the plurality of result example logic units and the example logical inference graph in the most relevant example.

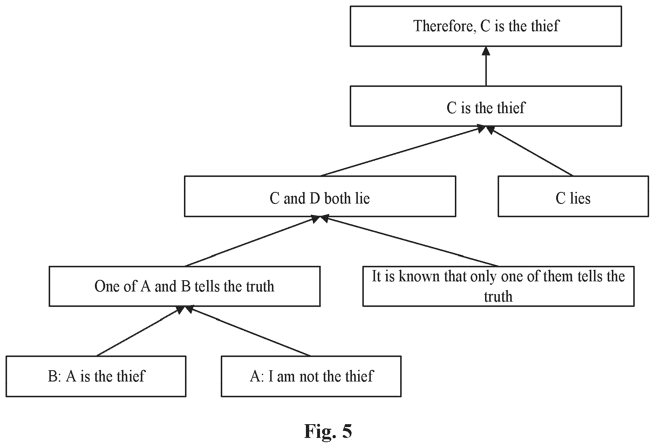

Then, the logical inference graph corresponding to the plurality of result logic units is generated by the generative large model using the plurality of input logic units, the plurality of result logic units and the concatenated prompt. For example, Fig. 5 is a schematic diagram of the logical inference graph generated in this embodiment.

Finally, logical judgment is performed based on the logical inference graph obtained in Fig. 5. In practical application, it is difficult to determine correctness of the whole logical inference graph at a time, such that with reference to the implementation of the steps S403-S405, the logical inference graph is firstly disassembled into the two-layer subgraphs, each two-layer subgraph represents one logical inference step, and only one two-layer subgraph is judged each time; in other words, only one logical inference step is judged at a time, which can reduce difficulty of overall judgment and greatly improve a judgment effect.

A specific judgment process can be implemented by using a logical inference model implemented based on the LLM. The correctness of the logical inference steps of the two-layer subgraphs in the logical inference graph is sequentially determined from bottom to top by the LLM, and if each logical inference step is correct, the whole logical inference process is correct, and otherwise, the logical inference process is determined to have a logicality problem. The method not only can provide the correctness judgment of the logical inference for logical inference questions, but also can accurately position steps with errors.

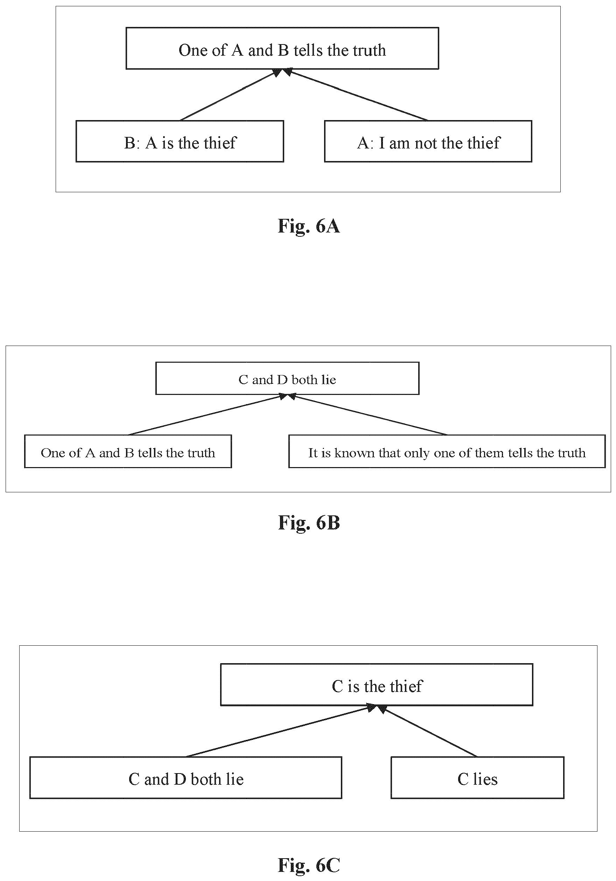

For example, Figs. 6A, 6B and 6C are the two-layer subgraphs split from the logical inference graph shown in Fig. 5 respectively. If the logical inference steps of the three two-layer subgraphs of Figs. 6A, 6B and 6C are all determined to be correct, the logical inference of the text generation result generated by the generative large model can be determined to be correct, and the generative large model is evaluated.

In the method according to the embodiment of the present disclosure, the evaluation is performed based on one text generation result generated by the generative large model. In an actual application scenario, the generative large model can execute a plurality of generation tasks within a period of time. Specifically, according to the above-mentioned mode of the embodiment of the present disclosure, whether the logical inference of the generation of the text generation result by the generative large model is correct can be evaluated when each generation task is executed. Further, whether accuracy of the period of time reaches a preset proportion threshold, such as 95%, 98% or other proportions, can be counted, and if yes, it is determined that the generative large model has high accuracy and a good effect; otherwise, the accuracy and effect of the generative large model may be considered to be poor.

Logicality is a most important dimension for embodying a logical inference capability of the generative large model, and is a necessary capability for solving some complex logical inference tasks, and if the logicality problem in the text generation result of the model can be found in an evaluation stage, a crucial role is played for effect evaluation and effect optimization of the logical inference. Compared with other dimensions, the logicality is a more intelligent symbol, such that difficulty of logicality evaluation is extremely high, and a traditional method cannot achieve a good effect easily. Therefore, in the method for processing a model generation result according to the present disclosure, the generative large model is evaluated from the perspective of logicality, an automatic evaluation framework for the logical inference of the generative large model is realized, and the logicality of the generative large model can be evaluated more effectively, thereby effectively improving the evaluation accuracy and the evaluation effect of the logical inference of the generative large model.

In the method for processing a model generation result according to the embodiment of the present disclosure, the logic units are first split, the logical inference graph is then generated, each two-layer subgraph in the logical inference graph is acquired, and then, the evaluation is performed with each two-layer subgraph as the granularity, i.e., the minimum logical inference step, such that the difficulty of determining whether the logical inference of the generative large model is correct can be greatly reduced; in other words, the evaluation difficulty of the generative large model can be effectively reduced, and then, the evaluation effect of the generative large model is greatly improved.

Moreover, in the method for processing a model generation result according to the embodiment of the present disclosure, the whole inference process is represented using a natural language, and the method has stronger universality and can be suitable for more types of questions.

Moreover, in the method for processing a model generation result according to the embodiment of the present disclosure, the logical inference process of the overall logical inference is represented by generating the logical inference graph, such that a logical inference error of the text generation result can be effectively detected, situations of logical inference missing and logical inference reversing can also be detected, and the method can be used for a data logic repair.

Moreover, in the method for processing a model generation result according to the embodiment of the present disclosure, whether the logical inference of the generative large model is correct can be accurately determined, and then, the generative large model can be automatically evaluated, thus saving time and labor, effectively increasing the evaluation speed, and effectively improving the evaluation efficiency. Moreover, the evaluation performed by generating the logical inference graph and the mode of evaluating the logical inference of the minimum logic unit, i.e., each two-layer subgraph in the logical inference graph, can further effectively improve the accuracy of judging whether the logical inference of the generative large model is correct or not, and then can effectively improve the evaluation accuracy of the generative large model and improve the evaluation efficiency.

In the embodiment of the present disclosure, the application in the text processing field is taken as an example, and in practical application, the technical solution of the present disclosure may also be applied in a speech processing field. For example, voice information may be collected first, and corresponding text information may be obtained through speech recognition. Then, based on the text information, the technical solution of the present disclosure is adopted to process the generation result of the model, such that whether the logical inference of the generative large model is correct is efficiently and accurately determined, and finally, the generative large model is accurately and effectively evaluated.

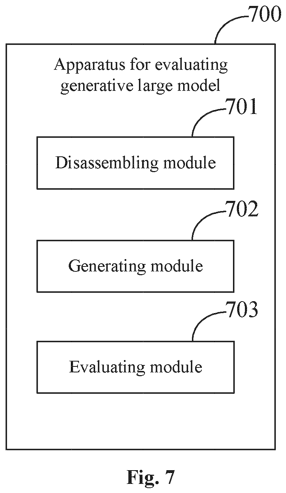

Fig. 7 is a schematic diagram according to a fourth embodiment of the present disclosure; as shown in Fig. 7, this embodiment provides an apparatus 700 for processing a model generation result, including:
a disassembling module 701 configured to disassemble a text generation result of a generative large model to obtain a plurality of result logic units; where each result logic unit includes a segment in the text generation result; each segment is capable of independently identifying one premise or conclusion in a logical inference relationship of the text generation result; the text generation result is a response result generated by the generative large model based on text input information;
a generating module 702 configured to generate a logical inference graph capable of characterizing a logical inference relationship among the plurality of result logic units based on the plurality of result logic units; and
an evaluating module 703 configured to evaluate whether logical inference of generation of the text generation result by the generative large model is correct or not based on the logical inference graph.

The apparatus 700 for processing a model generation result according to this embodiment has the same implementation as the above-mentioned relevant method embodiment with the above-mentioned modules to implement the implementation principle and the technical effects of the model generation result processing operation, and for details, reference may be made to the description of the above-mentioned relevant method embodiment, and details are not repeated herein.

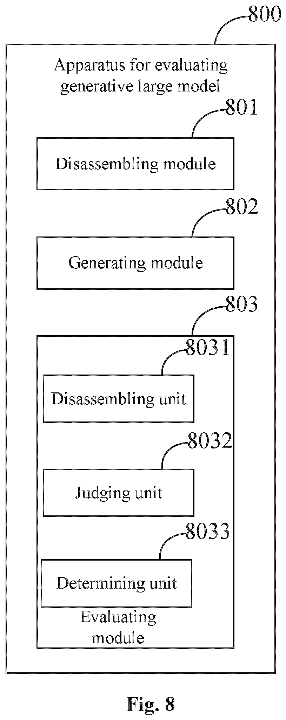

Fig. 8 is a schematic diagram according to a fifth embodiment of the present disclosure; as shown in Fig. 8, this embodiment provides an apparatus 800 for processing a model generation result, including modules with same names and functions as those in Fig. 7 above: a disassembling module 801, a generating module 802 and an evaluating module 803.

In the apparatus 800 for processing a model generation result according to this embodiment, the disassembling module 801 is configured to:
disassemble the text generation result of the generative large model using a pre-trained logic disassembly model to obtain the plurality of result logic units.

Further optionally, in one embodiment of the present disclosure, the generating module 802 is configured to:
generate the logical inference graph capable of characterizing the logical inference relationship among the plurality of result logic units based on the plurality of result logic units using a pre-trained logical inference graph generation model.

Further optionally, in one embodiment of the present disclosure, the disassembling module 801 is further configured to:
disassemble the text input information of the generative large model to obtain a plurality of input logic units; each input logic unit including a segment in the text input information, and each segment being capable of independently identifying one premise or conclusion in a logical inference relationship.

Further optionally, in one embodiment of the present disclosure, the generating module 802 is configured to:
generate the logical inference graph capable of characterizing the logical inference relationship among the plurality of result logic units based on the plurality of result logic units by referring to the plurality of input logic units.

Further optionally, in one embodiment of the present disclosure, the generating module 802 is configured to:
retrieve a most relevant example in a preset example database based on the plurality of input logic units and the plurality of result logic units; the example database including a plurality of groups of examples, and each example including a plurality of input example logic units corresponding to input example information, a plurality of result example logic units corresponding to result example information, and an example logical inference graph corresponding to the plurality of result example logic units; and
generate the logical inference graph corresponding to the plurality of result logic units by another pre-trained generative large models based on the plurality of input logic units, the plurality of result logic units, the plurality of input example logic units, the plurality of result example logic units and the corresponding example logical inference graph.

Further optionally, as shown in Fig. 8, in one embodiment of the present disclosure, the evaluating module 803 includes:
a disassembling unit 8031 configured to disassemble the logical inference graph into a plurality of two-layer subgraphs; each two-layer subgraph identifying one logical inference step;
a judging unit 8032 configured to judge whether logical inference of each two-layer subgraph is correct or not; and
a determining unit 8033 configured to determine that the logical inference of the generation of the text generation result by the generative large model is correct in response to determining that the logical inference of each of the plurality of two-layer subgraphs is correct.

The apparatus 800 for processing a model generation result according to this embodiment has the same implementation as the above-mentioned relevant method embodiment with the above-mentioned modules to implement the implementation principle and the technical effects of the model generation result processing operation, and for details, reference may be made to the description of the above-mentioned relevant method embodiment, and details are not repeated herein.

In the technical solution of the present disclosure, the acquisition, storage and application of involved user personal information are in compliance with relevant laws and regulations, and do not violate public order and good customs.

According to the embodiment of the present disclosure, there are also provided an electronic device, a readable storage medium and a computer program product.

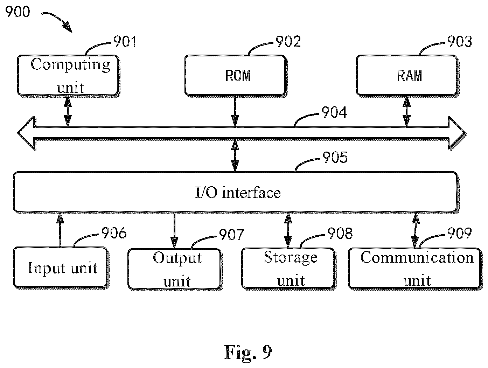

Fig. 9 shows a schematic block diagram of an exemplary electronic device 900 which may be configured to implement the embodiment of the present disclosure. The electronic device is intended to represent various forms of digital computers, such as laptop computers, desktop computers, workstations, personal digital assistants, servers, blade servers, mainframe computers, and other appropriate computers. The electronic device may also represent various forms of mobile apparatuses, such as personal digital assistants, cellular telephones, smart phones, wearable devices, and other similar computing apparatuses. The components shown herein, their connections and relationships, and their functions, are meant to be exemplary only, and are not meant to limit implementation of the present disclosure described and/or claimed herein.

As shown in Fig. 9, the device 900 includes a computing unit 901 which may perform various appropriate actions and processing operations according to a computer program stored in a read only memory (ROM) 902 or a computer program loaded from a storage unit 908 into a random access memory (RAM) 903. Various programs and data necessary for the operation of the device 900 may be also stored in the RAM 903. The computing unit 901, the ROM 902, and the RAM 903 are connected with one other through a bus 904. An input/output (I/O) interface 905 is also connected to the bus 904.

The multiple components in the device 900 are connected to the I/O interface 905, and include: an input unit 906, such as a keyboard, a mouse, or the like; an output unit 907, such as various types of displays, speakers, or the like; the storage unit 908, such as a magnetic disk, an optical disk, or the like; and a communication unit 909, such as a network card, a modem, a wireless communication transceiver, or the like. The communication unit 909 allows the device 900 to exchange information/data with other devices through a computer network, such as the Internet, and/or various telecommunication networks.

The computing unit 901 may be a variety of general and/or special purpose processing components with processing and computing capabilities. Some examples of the computing unit 901 include, but are not limited to, a central processing unit (CPU), a graphic processing unit (GPU), various dedicated artificial intelligence (AI) computing chips, various computing units running machine learning model algorithms, a digital signal processor (DSP), and any suitable processor, controller, microcontroller, or the like. The computing unit 901 performs the methods and processing operations described above, such as the method according to the present disclosure. For example, in some embodiments, the method according to the present disclosure may be implemented as a computer software program tangibly contained in a machine readable medium, such as the storage unit 908. In some embodiments, part or all of the computer program may be loaded and/or installed into the device 900 via the ROM 902 and/or the communication unit 909. When the computer program is loaded into the RAM 903 and executed by the computing unit 901, one or more steps of the method according to the present disclosure may be performed. Alternatively, in other embodiments, the computing unit 901 may be configured to perform the method according to the present disclosure by any other suitable means (for example, by means of firmware).

Various implementations of the systems and technologies described herein above may be implemented in digital electronic circuitry, integrated circuitry, field programmable gate arrays (FPGA), application specific integrated circuits (ASIC), application specific standard products (ASSP), systems on chips (SOC), complex programmable logic devices (CPLD), computer hardware, firmware, software, and/or combinations thereof. The systems and technologies may be implemented in one or more computer programs which are executable and/or interpretable on a programmable system including at least one programmable processor, and the programmable processor may be special or general, and may receive data and instructions from, and transmit data and instructions to, a storage system, at least one input apparatus, and at least one output apparatus.

Program codes for implementing the method according to the present disclosure may be written in any combination of one or more programming languages. These program codes may be provided to a processor or a controller of a general purpose computer, a special purpose computer, or other programmable data processing apparatuses, such that the program code, when executed by the processor or the controller, causes functions/operations specified in the flowchart and/or the block diagram to be implemented. The program code may be executed entirely on a machine, partly on a machine, partly on a machine as a stand-alone software package and partly on a remote machine, or entirely on a remote machine or a server.

In the context of the present disclosure, the machine readable medium may be a tangible medium which may contain or store a program for use by or in connection with an instruction execution system, apparatus, or device. The machine readable medium may be a machine readable signal medium or a machine readable storage medium. The machine readable medium may include, but is not limited to, an electronic, magnetic, optical, electromagnetic, infrared, or semiconductor system, apparatus, or device, or any suitable combination of the foregoing. More specific examples of the machine readable storage medium may include an electrical connection based on one or more wires, a portable computer disk, a hard disk, a random access memory (RAM), a read only memory (ROM), an erasable programmable read only memory (EPROM or flash memory), an optical fiber, a portable compact disc read only memory (CD-ROM), an optical storage device, a magnetic storage device, or any suitable combination of the foregoing.

To provide interaction with a user, the systems and technologies described here may be implemented on a computer having: a display apparatus (for example, a cathode ray tube (CRT) or liquid crystal display (LCD) monitor) for displaying information to a user; and a keyboard and a pointing apparatus (for example, a mouse or a trackball) by which a user may provide input for the computer. Other kinds of apparatuses may also be used to provide interaction with a user; for example, feedback provided for a user may be any form of sensory feedback (for example, visual feedback, auditory feedback, or tactile feedback); and input from a user may be received in any form (including acoustic, speech or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a local area network (LAN), a wide area network (WAN) and the Internet.

A computer system may include a client and a server. Generally, the client and the server are remote from each other and interact through the communication network. The relationship between the client and the server is generated by virtue of computer programs which run on respective computers and have a client-server relationship to each other. The server may be a cloud server or a server of a distributed system, or a server incorporating a blockchain.

It should be understood that various forms of the flows shown above may be used and reordered, and steps may be added or deleted. For example, the steps described in the present disclosure may be executed in parallel, sequentially, or in different orders, which is not limited herein as long as the desired results of the technical solution disclosed in the present disclosure may be achieved.

The above-mentioned implementations are not intended to limit the scope of the present disclosure. It should be understood by those skilled in the art that various modifications, combinations, sub-combinations and substitutions may be made, depending on design requirements and other factors. Any modification, equivalent substitution and improvement made within the spirit and principle of the present disclosure all should be included in the extent of protection of the present disclosure.

## Claims

1. A method for processing a model generation result applied to a text processing field implemented by a computer, **characterized by** comprising:
disassembling (S101) a text generation result of a generative large model to obtain a plurality of result logic units; wherein each result logic unit comprises a segment in the text generation result; each segment is capable of independently identifying one premise or conclusion in a logical inference relationship of the text generation result; and the text generation result is a response result generated by the generative large model based on text input information;
generating (S102) a logical inference graph capable of characterizing a logical inference relationship among the plurality of result logic units based on the plurality of result logic units; and
determining (S103) whether logical inference of generation of the text generation result by the generative large model is correct or not based on the logical inference graph.

2. The method according to claim 1, wherein disassembling (S101) the text generation result of the generative large model to obtain the plurality of result logic units comprises:
disassembling (S201) the text generation result of the generative large model using a pre-trained logic disassembly model to obtain the plurality of result logic units.

3. The method according to claim 1 or 2, wherein generating (S102) the logical inference graph capable of characterizing the logical inference relationship among the plurality of result logic units based on the plurality of result logic units comprises:
generating (S202) the logical inference graph capable of characterizing the logical inference relationship among the plurality of result logic units based on the plurality of result logic units using a pre-trained logical inference graph generation model.

4. The method according to any one of claims 1 to 3, further comprising:
before generating (S102) the logical inference graph capable of characterizing the logical inference relationship among the plurality of result logic units based on the plurality of result logic units, disassembling (S401) the text input information of the generative large model to obtain a plurality of input logic units; wherein each input logic unit comprises a segment in the text input information, and each segment is capable of independently identifying one premise or conclusion in the logical inference relationship.

5. The method according to claim 4, wherein generating (S102) the logical inference graph capable of characterizing the logical inference relationship among the plurality of result logic units based on the plurality of result logic units comprises:
generating (S402) the logical inference graph capable of characterizing the logical inference relationship among the plurality of result logic units based on the plurality of result logic units by referring to the plurality of input logic units.

6. The method according to claim 5, wherein generating (S402) the logical inference graph capable of characterizing the logical inference relationship among the plurality of result logic units based on the plurality of result logic units by referring to the plurality of input logic units comprises:
retrieving a most relevant example in a preset example database based on the plurality of input logic units and the plurality of result logic units; the example database comprising a plurality of groups of examples, and each example comprising a plurality of input example logic units corresponding to input example information, a plurality of result example logic units corresponding to result example information, and an example logical inference graph corresponding to the plurality of result example logic units; and
generating the logical inference graph corresponding to the plurality of result logic units by another pre-trained generative large model based on the plurality of input logic units, the plurality of result logic units, the plurality of input example logic units, the plurality of result example logic units and the corresponding example logical inference graph.

7. The method according to any one of claims 1 to 6, wherein determining (S103) whether the logical inference of generation of the text generation result by the generative large model is correct or not based on the logical inference graph comprises:
disassembling (S403) the logical inference graph into a plurality of two-layer subgraphs; wherein each two-layer subgraph identifies one logical inference step;
judging (S404) whether logical inference of each two-layer subgraph is correct or not; and
determining (S405) that the logical inference of the generation of the text generation result by the generative large model is correct in response to determining that the logical inference of each of the plurality of two-layer subgraphs is correct.

8. An apparatus (700) for processing a model generation result applied to a text processing field, **characterized by** comprising:
a disassembling module (701, 801) configured to disassemble (S101) a text generation result of a generative large model to obtain a plurality of result logic units; wherein each result logic unit comprises a segment in the text generation result; each segment is capable of independently identifying one premise or conclusion in a logical inference relationship of the text generation result; and the text generation result is a response result generated by the generative large model based on text input information;
a generating module (702, 802) configured to generate (S102) a logical inference graph capable of characterizing a logical inference relationship among the plurality of result logic units based on the plurality of result logic units; and
an evaluating module (703, 803) configured to determine (S103) whether logical inference of generation of the text generation result by the generative large model is correct or not based on the logical inference graph.

9. The apparatus according to claim 8, wherein the disassembling module (801) is configured to:
disassemble (S201) the text generation result of the generative large model using a pre-trained logic disassembly model to obtain the plurality of result logic units.

10. The apparatus according to claim 8 or 9, wherein the generating module (802) is configured to:
generate (S202) the logical inference graph capable of characterizing the logical inference relationship among the plurality of result logic units based on the plurality of result logic units using a pre-trained logical inference graph generation model.

11. The apparatus according to any one of claims 8 to 10, wherein the disassembling module (801) is further configured to:
disassemble (S401) the text input information of the generative large model to obtain a plurality of input logic units; wherein each input logic unit comprises a segment in the text input information, and each segment is capable of independently identifying one premise or conclusion in the logical inference relationship.

12. The apparatus according to any one of claims 8 to 11, wherein the evaluating module (803) comprises:
a disassembling unit (8031) configured to disassemble (S403) the logical inference graph into a plurality of two-layer subgraphs; wherein each two-layer subgraph identifies one logical inference step;
a judging unit (8032) configured to judge (S404) whether logical inference of each two-layer subgraph is correct or not; and
a determining unit (8033) configured to determine (S405) that the logical inference of the generation of the text generation result by the generative large model is correct in response to determining that the logical inference of each of the plurality of two-layer subgraphs is correct.

13. An electronic device, comprising:
at least one processor; and
a memory connected with the at least one processor communicatively;
wherein the memory stores instructions executable by the at least one processor to cause the at least one processor to perform the method according to any one of claims 1 to 7.

14. A non-transitory computer readable storage medium with computer instructions stored thereon, wherein the computer instructions are used for causing a computer to perform the method according to any one of claims 1 to 7.

15. A computer program product comprising a computer program which, when executed by a processor, implements the method according to any one of claims 1 to 7.
